# EUROPEAN PATENT SPECIFICATION

(11) **EP 1 182 466 B1**
(45) Date of publication and mention of the grant of the patent: **18.07.2007**
(21) Application number: 01202948.4
(22) Date of filing: 03.08.2001
(51) Int. Cl.: G01V 1/50, G01V 3/38, G01V 11/00

(54) **System of processing and presenting drill hole data**
Verfahren zur Verarbeitung und Präsentation von Bohrlochdaten
Système de traitement et de présentation des données de puits

(30) Priority: 14.08.2000 NL 1015928
(43) Date of publication of application: 27.02.2002
(73) Proprietor: Enres Energy Resources International B.V., 3712 AP Huis ter Heide (NL)
(72) Inventor: Nio, Swie Djin, 3712 AP Huis ter Heide (NL)
(74) Representative: Van Breda, Jacobus

(56) References cited:
- US-A- 5 999 485
- STAGE M: "Signal analysis of cyclicity in Maastrichtian pelagic chalks from the Danish North Sea" EARTH AND PLANETARY SCIENCE LETTERS, 15 NOV. 1999, ELSEVIER, NETHERLANDS, vol. 173, no. 1-2, pages 75-90, XP001001393 ISSN: 0012-821X
- SHIPBOARD SCIENTIFIC PARTY: "ODP Leg 166 Bahamas Transect Summary of Wireline Logging Results" INTERNET, [Online] XP002166922 Retrieved from the Internet: <URL:http://www.ideo.columbia.edu/BRG/ODP/ .../leg166> [retrieved on 2001-05-09]
- A.PROKPH: "2.3 Wavelet Analysis in High Resolution Stratigraphy" INTERNET, [Online] XP002166923 Retrieved from the Internet: <URL:http://iamg.org/cqs/cqsarticle3> [retrieved on 2001-05-09]

## Description

The invention relates to a method of processing and presenting drill hole measurement data such as obtained by taking a measurement in drill hole.

In practice data of drill hole measurements are used by the petroleum industry in the exploration and production of oil and gas, in order to predict and/or to detect the possible presence of strata containing oil and/or gas deposits. A problem is, however, that the known methods of interpreting drill hole data is very cost-intensive, and presupposes an exact knowledge of the geological history of the examined terrain. There is a large variety in the types of measurement data used with this examination. For example, measurements of the natural radioactivity in the examined drill holes are used. Also, acoustic signals are used in order to determine the speed of sound in the examined stratum, which is an indirect measure of the density of that stratum. However, other types of measuring data are also in use. Drill hole data analysis is known in the prior art. See "Signal analysis of cyolicity in Maastrichtian pelagic chalks from the Danish North Sea", Earth and Planetary Science letters 173 (1999) by Morton Stage.

It is the object of the invention to provide a method with which the person skilled in the art is able to gain an accurate understanding of the geological structure of the examined domain by means of partly computerized processing of the data from the drill hole measurement. An additional object of the invention is to make these data of drill hole measurements available in a cost-efficient and user-friendly manner.

In a first aspect of the invention the method of processing and presenting data of drill hole measurements as obtained by taking a measurement in a drill hole is characterized, in that the drill hole measurement data are divided into successive depth bands having a predetermined depth window; in that for each depth band a spectral analysis is carried out providing for each such depth band a spectral band; in that the spectral band of each individual depth band is compared with climate-related deposition cycles, such as the known Milankovitch cycle data, that relate to the examined area; and in that the predetermined depth window of the depths bands is adjusted to realize an optimal correlation between the spectral band of at least one depth band and the respective cycle or cycles. This renders the subsequent analysis of the drill hole measurement data highly reliable, allowing the obtained drill hole measurement data to be optimally correlated with the generally available geological knowledge of the examined area.

As already mentioned, the depth window of the various depth bands is predetermined. This depth window determines the resolution and consequently the accuracy with which the drill hole measurement data can be translated into geologically relevant information.

A further aspect of the invention relates to the method system being characterized in that the cycle pattern of the spectral band is determined by a first depth band; in that the cycle pattern of the first spectral band is used as prediction for the spectral band of a second depth band succeeding the first depth band; in that the occurrence of a discontinuity in a predicted spectral band is determined in relation to the actual measurement data; and in that said discontinuity is an indication for a geologically significant boundary layer. When assuming a certain predictability in regard to at least a part of the collected drill hole measurement data, it is possible to use this predictability for the detection of discontinuities. Such discontinuities appear to coincide with sudden changes in the drill hole measurement data that correspond to geological events such as changes in climate or trend breaks in the geological structure.

In yet another aspect of the invention, the method is characterized in that the discontinuities, which are determined with respect to the successive depth bands, are integrated with the variable parameter being the depth to which the drill hole measurement data refer. This is a very clear manner of visualizing the course of a trend relating to the examined geological structure. Especially the long-wave and short-wave trends in the cyclic patterns of the drill hole measurement data are thus visualized.

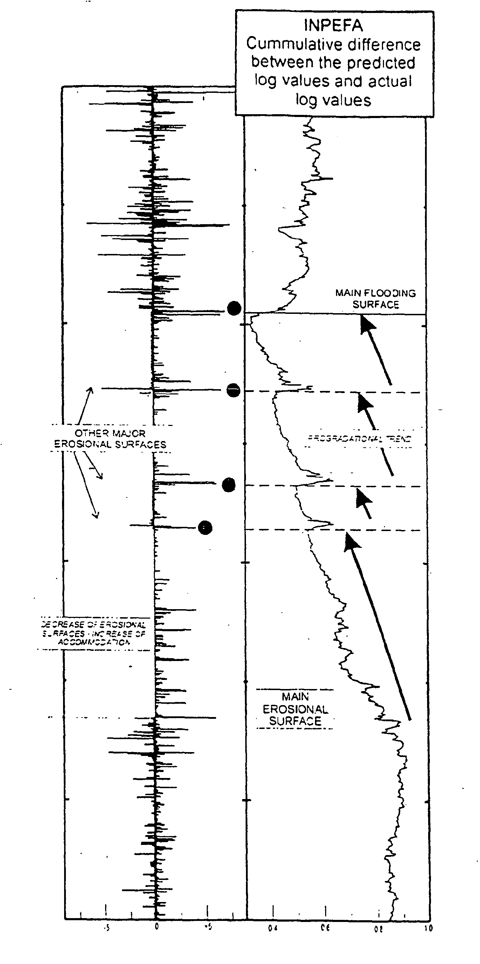

To the person skilled in the art, the above description is sufficiently clear and complete to be able to repeat the invention, so that an additional figure description may be omitted. The method according to the invention may, for example, be implemented on a stand-alone computer such as a PC to which a graphical image unit is coupled. Such a system will allow the presentation of measuring data such as shown in the appended single figure. The figure shows an image as may appear on a display of a system according to the invention. The image is comprised of a left half and a right half. The left half of the image shows the discontinuities determined with as variable parameter (y-axis) the depth of the drill hole. Said discontinuities may entail a deviation to the left or a deviation to the right, having a particular geological significance. A deviation to the left generally signifies an increase in sediment formation, whereas a deviation to the right signifies a decrease. For the determination of the discontinuities shown in the left half of the image, the drill hole measurement data are divided into successive depth bands, with for each depth band a depth window as determined by the user of the system. Subsequently, a spectral analysis is carried out for each depth band, providing a spectral band that relates to each such depth band. The spectral bands are then compared for each separate depth band with the (Milankovitch) cycle data applicable to the examined terrain, to arrive at the best possible coordination between these known data and the measurement data. To this end the depth window can be adjusted. When this is done, the discontinuities are determined by determining the cycle pattern of the spectral band pertaining to a first depth band and to use this as prediction for the spectral band pertaining to a second depth band succeeding said first depth band. This predicted spectral band relating to the second depth band is compared with the actual measurement data that have become available and with the differences between the predicted values and the discontinuities constituting the measurement values shown in the left half of the image. The right half of the image then shows the graph that results when the discontinuities determined in relation to the successive depth bands and which are shown in the left half of the image, are integrated with as variable parameter the depth to which the drill hole measurement data relate. As is clearly shown in the figure, in the right half, long-wave and short-wave trends can be discerned in this integrated image. These trends constitute identifiable information for an expert on the terrain here at issue, and provide a clear indication of its geological profile.

## Claims

1. A method of processing and presenting drill hole data such as obtained by taking a drill hole measurement,
**characterized in that**
- the drill hole measurement data are divided into successive depth bands having a predetermined depth window;
- for each depth band a spectral analysis is carried out producing for each such depth band a spectral band;
- the spectral band of each separate depth band is compared with climate-related deposition cycles, such as the known Milankovitch cycle data, that relate to the examined area; and
- the predetermined depth window of the depths bands is adjusted to realize an optimal correlation between the spectral band of at least one depth band and the respective cycle or cycles.

2. A method according to claim 1, **characterized in that**
- the cycle pattern of the spectral band is determined from a first depth band;
- the cycle pattern of the first spectral band is used as prediction for the spectral band of a second depth band succeeding the first depth band;
- the occurrence of a discontinuity in a predicted spectral band is determined in relation to the actual measurement data; and
- said discontinuity is an indication for a geologically significant boundary layer.

3. A method according to claim 1 or 2, **characterized in that** the discontinuities, which are determined with respect to the successive depth bands, are integrated with the variable parameter being the depth to which the drill hole measurement data refer.

## Patentansprüche

1. Verfahren zum Verarbeiten und Präsentieren von Bohrlochdaten, wobei diese beispielsweise durch Vornehmen einer Bohrlochmessung erhalten werden,
**dadurch gekennzeichnet, dass**
- die Bohrlochmessdaten in aufeinanderfolgende Tiefenbänder unterteilt werden, die ein vorbestimmtes Tiefenfenster haben;
- für jedes Tiefenband eine Spektralanalyse ausgeführt wird, mit der für jedes derartige Tiefenband ein Spektralband erzeugt wird;
- das Spektralband eines jeden separaten Tiefenbandes mit klimabezogenen Ablagerungszyklen verglichen wird, beispielsweise den bekannten Daten der Milanković-Zyklen, die das untersuchte Gebiet betreffen; und
- das vorbestimmte Tiefenfenster der Tiefenbänder so angepasst wird, dass eine optimale Korrelation zwischen dem Spektralband von mindestens einem Tiefenband und dem jeweiligen Zyklus oder den jeweiligen Zyklen realisiert wird.

2. Verfahren nach Anspruch 1, **dadurch gekennzeichnet, dass**
- das Zyklusmuster des Spektralbandes aus einem ersten Tiefenband bestimmt wird;
- das Zyklusmuster des ersten Spektralbandes als Prädiktion (Vorhersage) für das Spektralband eines zweiten Tiefenbandes verwendet wird, das auf das erste Tiefenband folgt;
- das Auftreten einer Diskontinuität (Unstetigkeit) in einem prädizierten Spektralband in Bezug zu den tatsächlichen Messdaten bestimmt wird; und
- die Unstetigkeit ein Indikator für eine geologisch signifikante Grenzschicht ist.

3. Verfahren nach Anspruch 1 oder 2, **dadurch gekennzeichnet, dass** die Diskontinuitäten, die bezüglich der aufeinanderfolgenden Tiefenbänder bestimmt werden, mit dem veränderlichen Parameter, der die Tiefe ist, auf welche sich die Bohrlochmessdaten beziehen, integriert werden.

## Revendications

1. Procédé de traitement et de présentation de données de puits de forage telles que celles qui sont obtenues par des mesures de puits de forage, **caractérisé en ce que** :
- les données de mesure de puits de forage sont divisées en deux bandes de profondeur successives ayant une fenêtre de profondeur prédéterminée ;
- pour chacune des bandes de profondeur, une analyse spectrale est réalisée, ce qui fournit une bande spectrale pour chacune de ces bandes de profondeur ;
- la bande spectrale de chacune des bandes de profondeur distincte est comparée à des cycles de dépôt liés au climat, tels que les données de cycle de Milankovitch connu, relatifs à la zone examinée ; et
- la fenêtre de profondeur prédéterminée des bandes de profondeur est ajustée pour obtenir une corrélation optimale entre la bande spectrale d'au moins une bande de profondeur et le ou les cycles correspondants.

2. Procédé de traitement selon la revendication 1, **caractérisé en ce que**:
- la forme du cycle de la bande spectrale est déterminée à partir d'une première bande de profondeur ;
- la forme du cycle de la première bande spectrale est utilisée comme prédiction de la bande spectrale de la seconde bande de profondeur succédant à la première bande de profondeur ;
- l'occurrence d'une discontinuité dans une bande spectrale prédite est déterminée en relation avec les données de mesure réelles ; et
- ladite discontinuité est une indication d'une couche limite géologiquement signifiante.

3. Procédé de traitement selon la revendication 1 ou 2, **caractérisé en ce que** les discontinuités, qui sont déterminées en relation avec les bandes de profondeur successives, sont intégrées avec le paramètre variable qui est la profondeur à laquelle les données de mesure de puits de forage se réfèrent.
